(19) Europäisches Patentamt / European Patent Office / Office européen des brevets

(11) **EP 4 124 883 B1**

(12) **EUROPEAN PATENT SPECIFICATION**

(45) Date of publication and mention
of the grant of the patent:
**24.12.2025 Bulletin 2025/52**

(21) Application number: **22181791.9**

(22) Date of filing: **29.06.2022**

(51) International Patent Classification (IPC):
$G01S\ 7/481^{(2006.01)}$    $G01S\ 17/10^{(2020.01)}$
$G01S\ 17/42^{(2006.01)}$    $G01S\ 17/89^{(2020.01)}$
$G01S\ 17/931^{(2020.01)}$    $G01S\ 7/4863^{(2020.01)}$

(52) Cooperative Patent Classification (CPC):
**G01S 17/42; G01S 7/4814; G01S 7/4816;
G01S 7/4817; G01S 17/10; G01S 17/89;
G01S 17/931**

(54) **APPARATUS AND METHOD OF LASER SCANNING**

VORRICHTUNG UND VERFAHREN ZUM LASERABTASTEN

APPAREIL ET PROCÉDÉ DE BALAYAGE LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.07.2021 IT 202100020006**

(43) Date of publication of application:
**01.02.2023 Bulletin 2023/05**

(73) Proprietor: **STMicroelectronics S.r.l.
20864 Agrate Brianza (MB) (IT)**

(72) Inventor: **CALTABIANO, Daniele
20125 Milano (IT)**

(74) Representative: **Buzzi, Notaro & Antonielli d'Oulx
S.p.A.
Corso Vittorio Emanuele II, 6
10123 Torino (IT)**

(56) References cited:
**US-A1- 2020 012 166**    **US-B1- 10 775 508
US-B2- 10 324 171**

**Description**

Technical field

The description relates to systems for scanning a multidimensional (e.g., 2D or 3D) environment, such as laser scanners or LIDARs, for instance.

One or more embodiments may be used in robot/vehicle autonomous navigation systems, for instance.

Background

An electronic system configured to measure a distance from the surroundings by measuring the time of flight (TOF) of a laser beam, that is the time taken for a light pulse to travel from a light source to a target and back (echo), is known as a light detection and ranging (briefly, LIDAR) or laser scanner system.

In order to obtain a TOF measurement, a time to digital (TDC) converter device may be employed, that is a device configured to measure (e.g., with sub-nanosecond accuracy) a time interval elapsed between two digital signals, such as the transmitted light pulse and the lighting echo signals of the LIDAR, for instance.

A TOF measurement can be obtained in a direct or indirect way, for instance.

A direct time of flight (dTOF) measurement uses a phase detector device configured to detect a phase shift between the transmitted laser light pulse and the light echo signal, wherein distance of the target is determined by the shift times (half) the speed of light.

An indirect time of flight (iTOF) measurement does not measure the phase shift directly but it obtains it from detecting the number of photons (or light intensity) during the pulse/modulation period of the light signal.

Laser scanner systems can be used to build maps of objects and landscapes by scanning 2D or 3D environments and acquiring multiple TOF measurements of the surroundings.

Existing laser scanners use alternative and divergent technical solutions to scan a 2D or 3D target.

For instance, some solutions involve controlled steering of laser beams on the target and taking a distance measurement at every steering direction.

For instance, a rotating electrical connector (e.g., a gimbal) may be used to sequentially scan different directions, that is an electromechanical device to facilitate transmission of power and electrical signals from a stationary to a rotating structure.

These solutions may be inconvenient for many applications due to, e.g.:

the presence of bulky elements such as the motor, mirror and/or rotating electrical connectors,
wear of the performance of these bulky parts,
relatively high-power consumption and limited operational frequency.

Single laser single sensor (briefly, SLSS) systems are also known. These systems comprise a pulsed laser source, an optical scanning arrangement (e.g., a first and a second mirror configured to rotate along a first and a second axis, respectively, with the first and the second axes orthogonal therebetween) and a light sensor configured to measure the TOF for each light pulse.

In SLSS systems the laser source 12 is pulsed with a pulse time interval greater than a maximum distance (or ToF) which can be measured, in order to prevent any ambiguity in the TOF measurement. This is a drawback of SLSS in that it limits the throughput and the applicability of the system 10, in particular for relatively high distances.

An alternative solution is the so-called "flash LIDAR" arrangement. This involves "flashing" illuminate a full scene of the target by coupling a diffractive optics (briefly, DOE) arrangement to the laser source and using a grid-like sensing arrangement, with each sensor in the grid arrangement dedicated to calculating the ToF of the light beam echoed from a corresponding part of the illuminated full scene.

This flash LIDAR arrangement may be inconvenient for many applications due to, e.g.:

the mapping resolution depends on the resolution of each sensor of the array of sensors,
high power consumption and expensive sensors are involved to obtain an adequate resolution of the environment,
the laser power used to illuminate the scene increases quadratically with the distance and linearly with the number of grid points, practically limiting a maximum application distance within a short range (e.g., 5 to 10 metres).

Existing sensors may involve additional reset signals and present a limited throughput.

Documents US 10 324 171 B2, US 2020/012166 A1 and US 10 775 508 B1 disclose relevant prior art.

Object and summary

An object of the invention is to contribute in overcoming the aforementioned drawbacks.

According to the invention, that object is achieved by means of an apparatus according to independent claim 1. A method of operating the apparatus is provided in independent method claim 7.

The claims are an integral part of the technical teaching provided herein with reference to the embodiments.

Brief description of the several views of the drawings

One or more embodiments will now be described, by way of non-limiting example only, with reference to the annexed Figures, wherein:

> Figure 1 is a diagram exemplary of an example apparatus not according to the invention, but useful for understanding it,
> Figure 2 is a diagram exemplary of a portion of the diagram of Figure 1,
> Figures 3 and 4 are diagrams exemplary of patterns suitable for use in one or more embodiments,
> Figure 5 is a diagram exemplary of principles underlying one or more embodiments,
> Figure 6 is a diagram exemplary of ways of combining image frames obtained according to the present disclosure, Figure 8 is a diagram of an apparatus according to the invention,
> Figures 7, 9 and 10 are diagrams exemplary of alternative example apparatuses not according to the invention, but useful for understanding it,
> Figure 11 is a diagram exemplary of a beam spot according to the example not according to the invention of Figure 10.

Detailed description of exemplary embodiments

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

The drawings are in simplified form and are not to precise scale.

Throughout the figures annexed herein, like parts or elements are indicated with like references/numerals and a corresponding description will not be repeated for brevity.

The references used herein are provided merely for convenience.

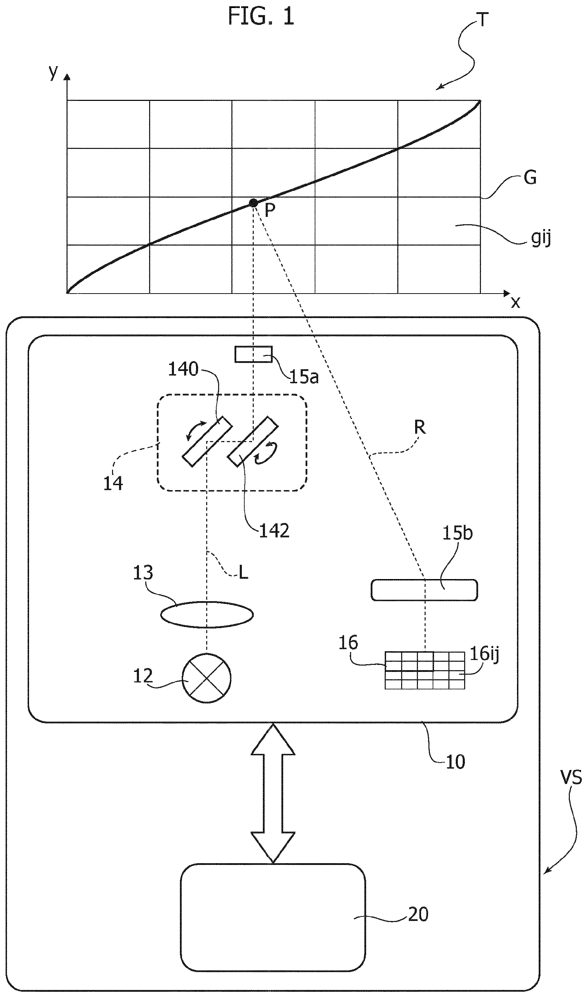

As exemplified in Figure 1, a laser scanner system or apparatus 10 comprises:

> a light source 12, preferably a pulsed laser source, configured to emit a light beam L,
> optionally, a beam shaping optics 13 coupled to the light source 10, e.g., a focusing lens 13 configured to focus the light beam L,

> a beam steering arrangement 14 comprising optical elements configured to controllably steer, via reflective and/or refractive phenomena, the (focused) light beam L from the light source 10, directing the light beam L towards a target scene T and projecting a pattern of light spots P thereon,
> an array of sensors 16, the array of sensors 16 comprising a plurality of light sensors, where an ij-th light sensor 16ij of the plurality of light sensors (or photodetectors) is configured to detect an echo laser beam R reflected from a respective portion of the target surface T illuminated by the light spot P formed thereon.

As exemplified in Figure 1, optionally, the system 10 further comprises at least one optical element 15a, 15b coupled to at least one of the beam steering arrangement 14 and the sensor array 16.

For instance:

> a first optical element 15a is coupled to the scanning engine 14, and/or
> a second optical element 15b is coupled to the sensor array 16.

In one or more embodiments, the first 15a and/or second 15b optical element is/are configured to correctly focus the target region in each sensor 16ij, and/or to compensate geometrical distortions occurring in the light projecting process via the arrangement 14 (e.g., Keystone-Pincushion deformation, known per se).

As exemplified in Figure 1, the second optical element 15b comprises a filtering window configured to provide an aperture for the sensing array 16 and/or a focusing element (e.g., a lens arrangement) associated to each sensor 16ij in the array 16 focusing thereto the light filtered by the aperture.

Alternatively, the known geometrical distortion can be compensated using a dedicated method of laser projection that properly select the (time and space) points in which the laser is pulsed. For instance, the control unit 20 may be configured to control the beam steering arrangement 14 and the laser source 12 in order to synchronize light pulse emission by the source 12 and position of the mirrors 140, 142, obtaining a compensated projection of the light pulse on the target scene T.

As exemplified herein, the apparatus comprises at least one of:

> a first optical element (for instance, 15a) coupled to the beam steering arrangement, the first optical element (for instance, 15a) interposed the beam steering arrangement and the target, and
> a second optical element (for instance, 15b) coupled to the array of sensors, the second optical element interposed the target and the array of sensors.

For instance, the first and/or second optical elements are configured to counter a Keystone-Pincushion deformation during projecting at least one beam spot (for instance, P, $P_1$, $P_1'$) per grid cell (for instance, $g_{ij}$) in the portioned FOV region (for instance, T).

For the sake of simplicity, in the following the target surface T is considered to correspond to an entire field of view (briefly, FOV) of the laser scanner system 10, that is the angular extent of the field which can be observed with an optical instrument. In the example considered, this FoV encompasses both to the area projected by the beam steering arrangement 14 and the area viewed by the array of sensors 16.

As exemplified in Figure 1, the apparatus 10 may be used in a navigation system VS on-board a vehicle (such as a (autonomous) wheeled vehicle, known per se). For instance, the control unit 20 may provide measurements of distance between a target object P and the vehicle to the navigation system VS in order to drive movements of the vehicle (e.g., controlling a speed of the wheels).

It will be once again recalled that the discussion of the apparatus as per the present disclosure within the framework of a vehicle/robot navigation system VS is merely exemplary and not limitative of the embodiments. An apparatus and method as described herein can also be used independently of any navigation system arrangement, and - more generally - in (at least notionally) any area other than the field of navigation systems, such as augmented reality, visual support and graphical effects, for instance.

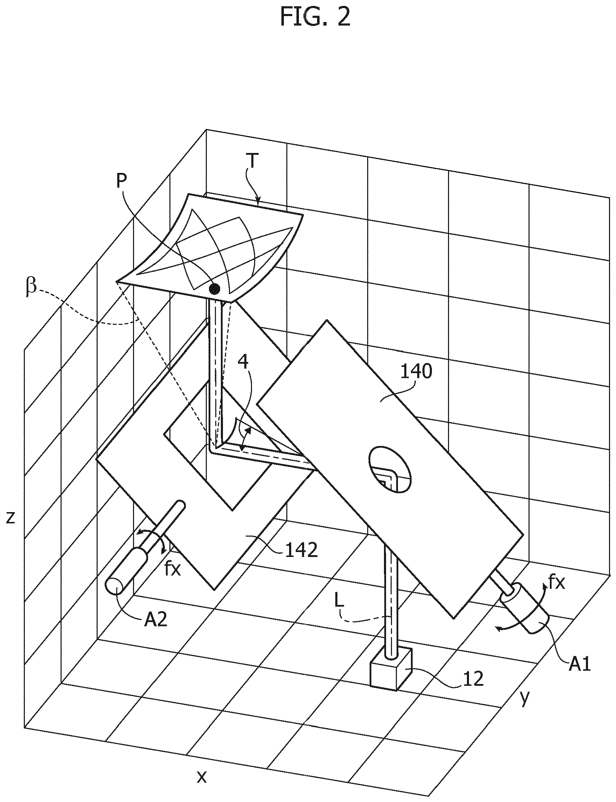

As exemplified in Figures 1 and 2, the beam steering arrangement 14 comprises a set of optical components 140, 142 adapted to deflect and/or manipulate an incident laser beam L. For instance, the beam steering arrangement 14 comprise a first 140 and a second 142 conventional mono-axial microelectromechanical mirrors (briefly, MEMS) each configured to rotate along a single axis (e.g., via respective actuators coupled to the mirrors), with respective rotational axes (generally) orthogonal therebetween (represented as abscissa x and ordinate y arrows in Figure 1).

As exemplified in Figure 2, the mirrors 140, 142 are movable via respective actuators A1, A2 (illustrated in a completely schematic way in Figure 2) configured to rotate the two mirrors 140, 142 - and therefore the laser beam L deflected by them - along mutually perpendicular rotation.

As exemplified in Figure 2:

the first mirror 140 is configured to rotate along a first, e.g., horizontal, axis x, with a first frequency $f_x$, varying a direction of the light beam L in a first, e.g., horizontal, plane xy, and steering the beam along a first angle $\alpha$ (e.g., $\alpha=\pm20°$) as a result,

the second mirror 142 is configured to rotate along a second, e.g., vertical, axis y with a second frequency $f_y$, varying a direction of the laser beam L in a second, e.g., vertical, plane yz, and steering the beam along a

second angle $\beta$ (e.g., $\beta=\pm15°$).

In one or more embodiments, the beam steering arrangement 14 can also comprise multiple and/or different types of optical components, such as: prisms, lenses, diffraction gratings, beam-splitters, polarizers, expanders, and other components known per se, combined to allow the properties of the laser beam L to be controlled according to the present disclosure.

In one or more embodiments, the beam steering arrangement 14 may comprise biaxial MEMS mirrors each suitable to rotate along two orthogonal axes. For instance, biaxial MEMS mirrors as discussed in document IT 102020000022978 (not yet published) may be suitable for use in one or more embodiments.

According to the invention, an apparatus (for instance, 10), comprises:

a laser light source (for instance, 12) configured to transmit at least one beam of light pulses (for instance, L) towards a target, projecting at least one corresponding beam spot (for instance, P) thereon, an array of sensors (for instance, 16) with a plurality of sensors (for instance, 16i, 16j, 16ij) distributed according to a grid (for instance, G), sensors (for instance, 16i) in the array of sensors configured to sense a light pulse incident thereon in response to reflection of at least one light pulse (for instance, P, $P_1$, $P_1'$) of the beam of light pulses from a field of view, FOV, region (for instance, T) in the target, sensors in the array of sensors further configured to provide a signal indicative of a time of incidence thereon of at least one light pulse (for instance, R, R'). According to the invention:

the FOV region (for instance, T) of the array of sensors is portioned into grid cells (for instance, $g_{ij}$) according to the grid, each sensor in the array of sensors is configured to sense at least one echo light pulse reflected from a respective grid cell (for instance, $g_1$) in the portioned FOV region, and the apparatus comprises a beam steering arrangement (for instance, 14) configured to cyclically vary a direction of transmission (for instance, $\alpha$, $\beta$) of the beam of light pulses, projecting at least one beam spot per grid cell (for instance, $g_{ij}$) in the portioned FOV region,

According to the invention, the apparatus is characterized in that the beam steering arrangement comprises:

a first microelectromechanical, MEMS, mirror (for instance, 140) configured to oscillate around a first axis with a first oscillating angle (for instance, $\alpha$), and a second MEMS mirror (for instance, 142) configured to oscillate around a second axis with a second oscillating angle (for instance, β),
wherein each of the first MEMS mirror and the second MEMS mirror is coupled to a respective actuating device (for instance, A1, A2) configured to drive an oscillating movement of the respective mirror, wherein the beam steering arrangement further comprises a MEMS lens (for instance, 146) coupled to at least one of the first and second MEMS mirrors (140, 142), the MEMS lens configured to vary the direction of transmission of the light pulses (for instance, P1, P1') within each grid cell (for instance, gij) in the portioned FOV of the array of sensors.

For instance, the first axis of oscillation of the first MEMS mirror and the second axis of oscillation of the second MEMS mirror are orthogonal therebetween.

In alternative examples not according to the invention, the beam steering arrangement 14 may comprise MEMS lenses in place of mirrors. For instance, MEMS lenses like the ones discussed in document US 17 12 4027 (not yet published) can be suitable for use and can provide a more compact solution with respect to those using mirrors.

As exemplified in Figure 1, the array of sensors 16 can comprise a plurality of photodetectors, with each photodetector 16ij arranged as an element of a (e.g., 64 x 64) matrix of photodetectors 16.

For instance, the array of optical sensors 16 may comprise processing circuitry configured to apply signal processing to the detected echo laser beam R, providing a (e.g., pulse-by-pulse) ToF measurement.

As exemplified in Figure 1, driving circuitry 20 (e.g., a microcontroller or other processing circuitry) is coupled to the laser scanner system 10, for instance in order to drive the actuators A1, A2 to control movement of the mirrors 140, 142 of the beam steering arrangement 14, and/or to power the laser source 12, as well as to receive the time-of-flight measurement from the array of sensors 16.

As exemplified in Figure 1, a grid G is (ideally) superimposed onto the target T, the grid G configured to have a number of grid cells equal to the number of sensors of the array of sensors 16, the grid cells in the grid G arranged to reflect the same spatial arrangement of the sensors in the array of sensors 16.

In other words, the field of view T of the system 10 is treated as a grid G where each grid cell $g_{ij}$ is in a one-to-one correspondence with each sensor 16ij of the array of sensors 16, that is an ij-th grid cell $g_{ij}$ is detected by a corresponding ij-th sensor 16ij of the array of sensors 16.

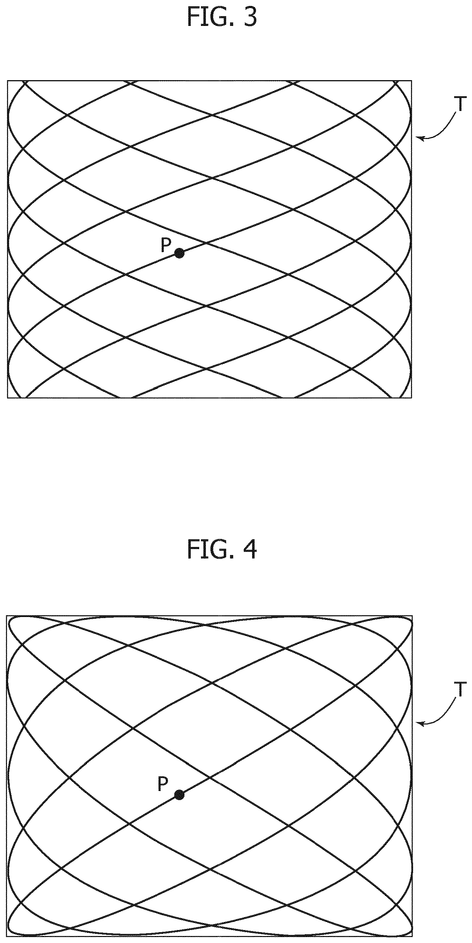

As exemplified in Figures 1 and 2, the optical elements 140, 142 of the beam steering arrangement 14 may be controlled (e.g., via driving circuitry 20, as discussed in the foregoing) to cyclically steer the (pulsed) light beam L from the source 12, so as to "draw" patterns such as those exemplified in Figures 3 and 4 onto the target scene.

As exemplified herein, the beam steering arrangement 14 is configured to cyclically vary the direction of transmission of the light pulses according to a pattern, preferably selected among a raster scan pattern and a Lissajous pattern.

Figure 3 shows an exemplary raster scan pattern which can be obtained by varying one of the first and second angles, e.g., the first angle α, is varied sinusoidally with time while the other, e.g., the second angle β is varied (piece-wise) linearly with time (for example according to a triangular waveform, indicated as "tri" in the following). This may be expressed as:

$$\alpha = A * sin(2\pi t * f_x + \varphi_x)$$

$$\beta = B * tri(2\pi t * f_y + \varphi_y)$$

where φ_x and φ_y are respective initial angular position or phase values.

Figure 4 shows a Lissajous pattern which can be obtained by varying the first angle α and the second angle β sinusoidally with time, at proper (resonant) frequencies. This may be expressed as:

$$\alpha = A * sin(2\pi t * f_x + \varphi_x)$$

$$\beta = B * sin(2\pi t * f_y + \varphi_y)$$

For the sake of simplicity, an exemplary case is used where the array of sensor comprises a number of nine sensors arranged as a column vector and focusing the attention on a single angle variation to illustrate principles underlying embodiments. It is otherwise understood that this example is purely exemplary and in no way limiting.

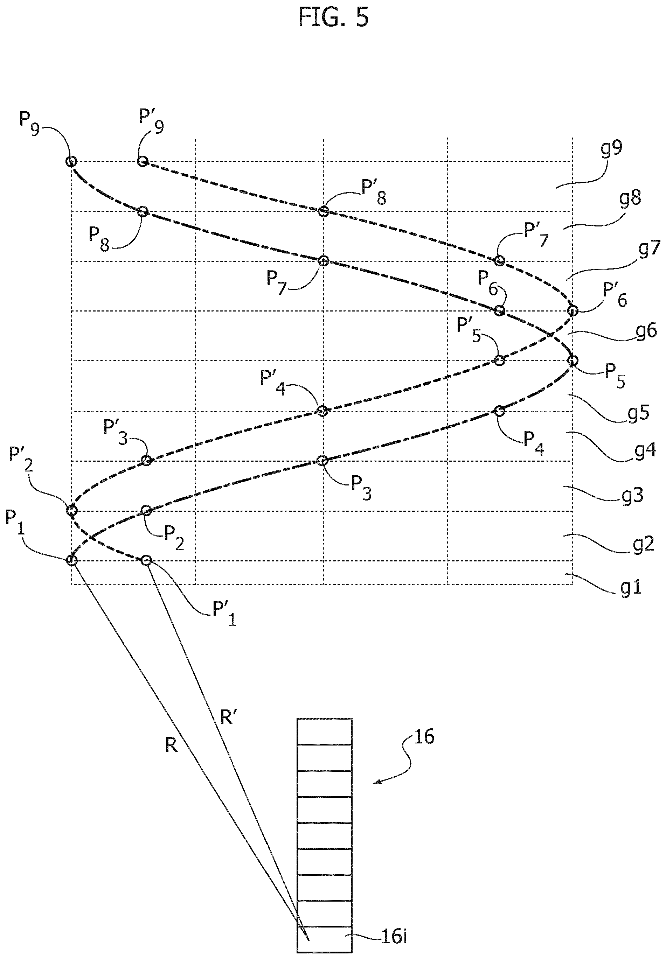

As exemplified in Figure 5, if the sensor array 16 comprises a column vector with nine sensors, the corresponding grid G configured to be superimposed to the target FOV T has nine grid cells $g_1$, $g_2$, ..., $g_i$, ..., $g_8$, $g_9$ arranged as a column vector.

As exemplified in Figure 5, in a first beam steering cycle of operating the beam steering arrangement 14:

the first mirror 140 is driven to vary sinusoidally the first angle α, while the second mirror 142 is driven to vary according to a linear (e.g., sawtooth) function (this first trajectory is represented in dashed line in Figure 5, with α being horizontal, for instance),
the pulsed laser L is driven so that an i-th light spot (e.g., $P_1$) illuminates a respective i-th grid cell (e.g., $g_1$); correspondingly, an i-th sensor 16i of the sensor array 16 receives the echo beam R from the i-th light pulse; consequently, the i-th sensor 16i computes the distance of the corresponding object in a respective portion (e.g., $g_1$) of the target scene T based on the (direct or indirect) ToF of the echo beam R.

As exemplified in Figure 5, in a second steering cycle of operating the beam steering arrangement 14, subsequent the first steering cycle:

the mirrors 140 and 142 are driven according to the same equations but varying the phases $\varphi_x$ and $\varphi_y$ (this second trajectory is represented in solid line in Figure 5),
the pulsed laser L is again driven so that an i-th light spot (e.g., $P_1$') preferably in a different position with respect to the previous i-th light spot (e.g., $P_1$) for the same i-th grid cell (e.g., $g_1$), illuminating a "new" respective i-th grid cell location (e.g., $g_1$'); correspondingly, the i-th sensor 16i receives a second echo R' from the "new" i-th light pulse (e.g., $P_1$') that illuminated that "new" portion of the target T; consequently, the i-th sensor 16ij sequentially detects more points referred to an object in a respective portion (e.g., $g_1$) of the (gridded G) target scene T. For the sake of simplicity, in the exemplary case of Figure 5 the projection is considered to take place from bottom to top with the first light spot $P_1$, $P_1$' for each cycle falling within the first grid element $G_1$, being otherwise understood that the order may be reversed, with the raster scan being performed from top to bottom.

In one or more embodiments, the variation of the function to vary the first angle $\alpha$ (and/or second angle $\beta$) can comprise, for instance, varying the waveform equations, the phase ($\varphi_x$ or $\varphi_y$):

e.g., randomly or (piece-wise) linearly or sinusoidally, and/or
selecting Lissajous pattern so that a full coverage of the target area T is obtained by overlapping of sub-Lissajous curves.

It is noted that, even varying the phase, a same area in the i-th grid element $g_i$ may be illuminated multiple times in a number of cycles of beam steering 14, without this substantially affecting the resolution of the system 10.

In one or more embodiments, performance parameters (e.g., resolution, frame-rate and maximum target distance) can be tuned varying the vertical size of the sensor array 16 and the time to reposition the laser spot between two different trajectories.

In one or more embodiments, steering light pulses so that one light spot $P_1$ per grid cell $g_i$ is cyclically moved in a different area $P_1$' within the grid cell facilitates improving a global resolution of the apparatus. For instance, the resolution of the apparatus 10 is a function of the number of sensors 16i, 16ij in the sensor array 16 times a resolution of the cyclical variation of the position between subsequent steering cycles ("secondary" resolution).

For example, using a "secondary" resolution about 30 x 17 resolution in a sensor array 16 comprising a matrix of 64 x 64 sensors, the total system resolution reaches a value compatible with the standard ITU 709 or full high definition (briefly, FHD).

As exemplified herein, at least one sensor (for instance, 16i) in the array of sensors comprises an avalanche photodiode, APD, or a single photon avalanche photodiode, SPAD.

In one or more embodiments, a single avalanche photodiode (briefly, APD) is found suitable for use as a sensor in the array of sensors 16.

An APD is a per se known semiconductor-based photodetector (that is, a photodiode) which is operated with a relatively high reverse voltage (e.g., just below breakdown) so that carriers excited by absorbed photons are strongly accelerated in the strong internal electric field, generating secondary carriers as a result. This triggers an avalanche process that effectively amplifies the photocurrent by a (controllable) amplification factor.

In alternative embodiments, arrays of Geiger-mode APDs (also currently referred to as single-photon avalanche diode, briefly SPADs) may be suitable for use in the array of sensors 16. These are also semiconductor-based photodetectors (e.g., photodiodes) known per se, so that a detailed description of their functioning is not reproduced for the sake of brevity.

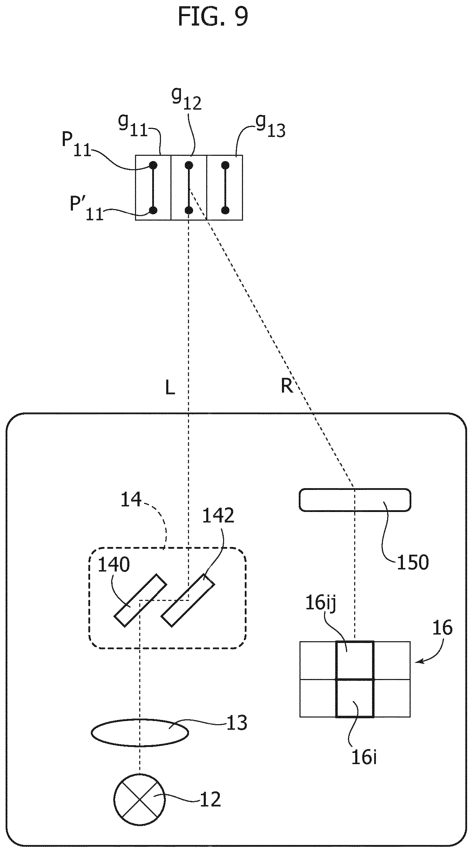

For instance, the array of sensors 16 can comprise a column vector whose elements comprise arrays of (e.g., sixteen) SPADs grouped together in order to provide a single ToF measurement (as discussed in the following with reference to Figure 9).

In one or more embodiments, a device currently known with the name of ST-Ed 256 x 256 SPAD imager produced by STMicroelectronics may be suitable for use as photodetector 16ij in the array of sensors 16.

For instance, a device as discussed in document Istvan Gyongy et al.: "1kFPS Time-of-Flight Imaging with a 3D-stacked CMOS SPAD Sensor" (R25), 2019 INTERNATIONAL IMAGE SENSOR WORKSHOPS proceedings, Snowbird Resort, Utah, USA, June 24-27, 2019 is exemplary of such a device.

One or more embodiments may envisage performing multiple, partial scans of the target T with a given beam sweeping cycle and with a reduced sampling rate of the target scene (that is, number of light spots used to illuminate it) per steering cycle.

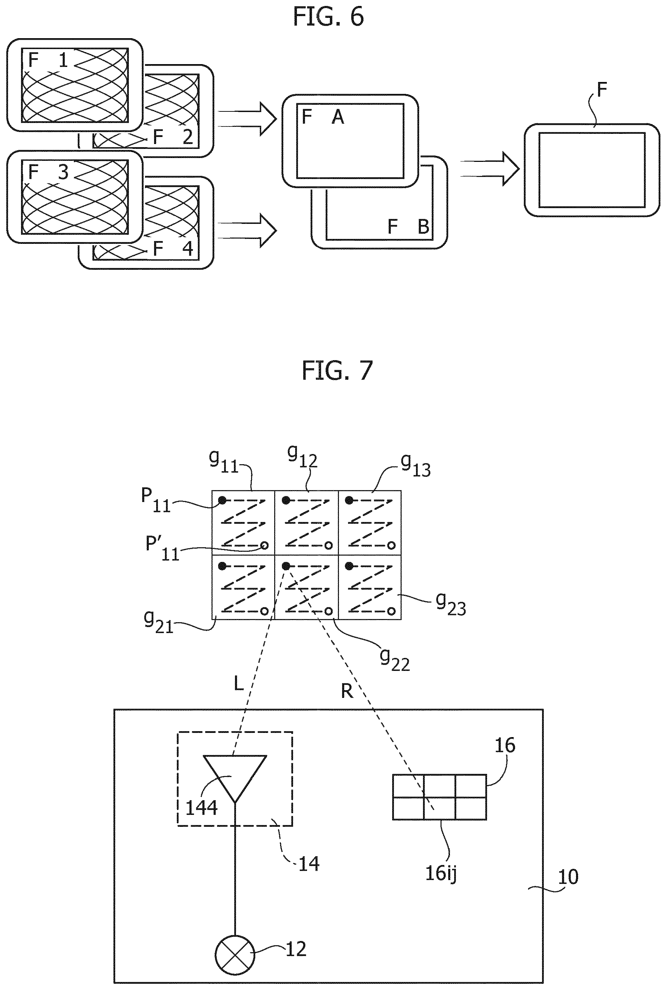

As exemplified in Figure 6, a first set of these partial scans may lead to obtaining, for instance using a frame-rate of 60 frames per second, a first set of subframes F1, F2 and a second set of subframes F3, F4.

Data points obtained per each of these subframes (black dots represent missing data points in the images of Figure 6) may correspond to 51% of the full scene.

Subsequently, a method of obtaining an image of the target scene using these subframes may comprise:

(pairwise) combining subframes in the respective first and second sets of subframes,

providing a first combined subframe FA, e.g., by combining subframes F1 and F2 therebetween, and a second combined subframe FB, e.g., by combining subframes F1 and F2 therebetween, the combined subframe having an increased filling rate with respect to the subframes F1, F2, F3, F4 (e.g., 76%), merging the first and second combined subframes FA, FB in a merged frame F, for instance updated at 15 fps (fifteen frames-per-second) and a final fill rate of about 97%.

As exemplified in Figure 6, a full Lissajous pattern can be divided into partial patterns, each of which sparsely but rapidly samples the field of view. For instance, a VGA-like resolution can be obtained by merging together four pictures of smaller resolution, e.g., quarter VGA (QVGA).

It is noted that the example above is exemplary of one of the possible ways of combining partial frames. In one or more embodiments, other combinations can be employed to reduce the size of the sensor array 16 by increasing the number of Lissajous sub framing (e.g., QQVGA sensor for sixteen frames or 80 x 60 for an amount of 256 frames).

In examples not according to the invention, the apparatus comprises a diffusive optical element (for instance, 160) coupled to the array of sensors and placed intermediate the target and the array of sensors, groups of SPAD sensors (for instance, $16j$) in the array of sensors configured to provide a joint signal indicative of a time of incidence of at least one light pulse (for instance, R, R') in a joint area of respective grid cells (for instance, $g_{11}$, $g_{12}$, $g_{13}$).

For instance, the diffusive optical element is configured to split the light pulse incident thereon into single photons and to direct each photon towards respective SPAD sensors in the groups of SPAD sensors.

Figure 7 is a diagram exemplary of an alternative example not according to the invention, where the beam steering arrangement 14 comprises optical elements to provide an Optical Phased Array (OPA), configured to split the laser beam from the source 12 in an array of mutually coherent emitters, where the phase difference between each pair of emitters is controlled (e.g., via driving circuitry 20) in order to manipulate the direction of the outgoing combined beam, in a manner known per se.

As exemplified in Figure 7, the beam steering arrangement 14 comprises an optical phased array, OPA, 144. For instance, the OPA is capable of steering the light beam L along to the two oscillation axes.

In the example of Figure 7, a method of performing laser scanning with the apparatus 10 comprises:

partitioning the target surface T according to a grid having in a plurality of grid cells $g_{11}$, $g_{12}$, $g_{13}$, $g_{21}$, $g_{22}$,

$g_{23}$, the grid mirroring a same size as the array of sensors 16, e.g., two rows and three columns; projecting a first light spot (e.g., $P_{11}$) onto a first, initial, position (e.g., top-left corner) of a first grid cell (e.g., $g_{11}$),

row-wise iterating projecting a first light spot (e.g., $P_{12}$, $P_{13}$) onto the area of a i-th grid cell (e.g., $g_{12}$, $g_{13}$) until the last grid element is reached; this may be performed by increasing an index j indicative of the column of the grid while maintaining constant an index i indicative of the row of the ij-th grid cell;

optionally, after projecting the respective light spot (e.g., $P_{13}$) onto the last grid element of the row (e.g., $g_{13}$), row-wise iterating, on grid cells of the second row, projecting a respective light spot (e.g., $P_{21}$) onto the first position (e.g., top-left corner) but starting from the last grid cell of the row after of the first row (e.g., $g_{23}$),

upon reaching the end (e.g., $g_{21}$) of the second row, varying the initial position, for instance following a raster scan curve (indicated in dashed line in Figure 7), for instance setting a new position (e.g., bottom-right);

projecting a subsequent light spot (e.g., $P_{11}'$) onto the newly set position (e.g., bottom-right corner) of the first grid cell (e.g., $g_{11}$)

repeatedly row-wise iterating projecting a subsequent light spot (e.g., $P_{12}'$, $P_{13}'$) onto the area of a i-th grid cell (e.g., $g_{12}'$, $g_{13}'$) until the last grid element is reached.

In one or more embodiments, an improved resolution may be obtained selecting an OPA 144 with a certain pulse-to-pulse interval, e.g., about 16 (sixteen) nanoseconds (1 nanosecond = 1 ns = $10^{-9}$ s), and with an array of sensors 16 having a certain size, e.g., sixteen rows and eight columns.

In the example considered, a FullHD (e.g., 1920 x 1080) at 30 fps (frame-per-second) can be obtained, for instance using a sub-pixel scanning resolution about 120 x 135. This may result in a maximum detectable distance increased, e.g., from less than 3 meters to more than 300 meters, facilitating use of the instant solution in automotive applications (such as ADAS - Advanced Driver Assistance Systems, for instance).

According to the invention, the beam steering arrangement 14 comprises a multi-stage (double stage) steering arrangement capable of steering the light beam L along multiple (e.g., two) axes.

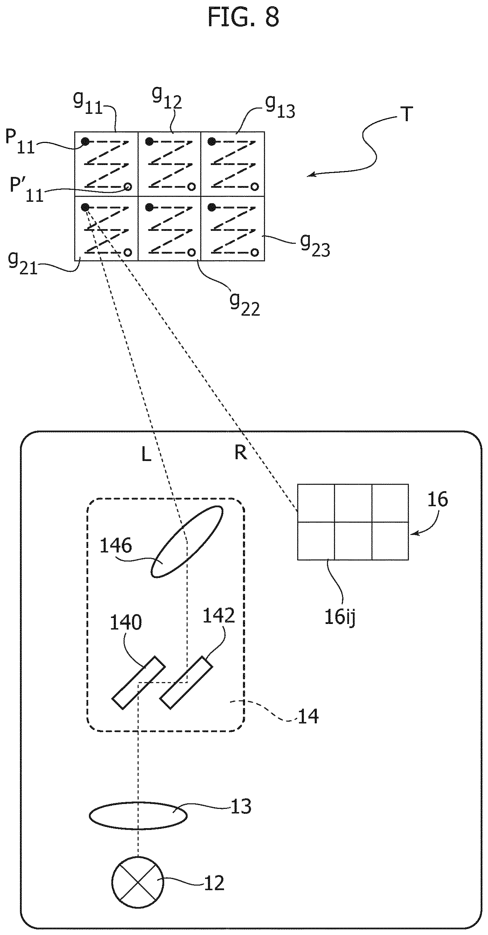

As shown in Figure 8, which is an embodiment according to the invention, the beam steering arrangement 46 comprises:

a first steering stage (two orthogonal mirrors 140, 142) configured to direct the laser beam to project a specific light spot (e.g., $P_{11}$, $P_{11}'$) on an ij-th grid cell (e.g., $g_{11}$),
a second steering stage (a dual axes MEMS lens 146) configured to move the projected light spot within an ij-th grid cell.

As shown in Figure 8, using this multi-stage arrangement 140, 142, 146 facilitates increasing the final resolution of the system 10.

For instance, an initial position $P_{11}$ of the light spot projected for each grid cell element may be varied to improve illumination coverage.

In the embodiment in Figure 8, the double stage arrangement comprises two single stage arrangements. In examples not according to the invention, both the first and second beam steering stages can comprise multi-stage and multi-axial arrangements comprising mirrors, lenses, OPA or other suitable optical arrangements.

In an alternative example not according to the invention, elements of the array of sensors 16 can be (sub)grouped together, e.g., column-wise or row-wise, so that a (sub)group is configured to provide a ToF measurement of a cell of the grid.

As exemplified in Figure 9, which is an example not according to the invention, the apparatus 10 comprises a diffusing optical element 150 interposed between the target T and the array of sensors 16. For instance, the diffusing optical element 150 is configured to spread randomly photons corresponding to one reflected laser beam R coming from an ij-th grid cell (e.g., $g_{12}$) to all sensors in an j-th column 16j of the sensor array 16. Preferably, the sensor array 16 comprises a SPAD matrix (e.g., of size 2000 x 32) wherein elements are grouped together column-wise (e.g., thirty-two elements in a j-th column) to provide a single ToF measurement and wherein the diffuser is configured to spread randomly each photon corresponding to one of the (e.g., one thousand, vertical) cells on the entire SPAD column.

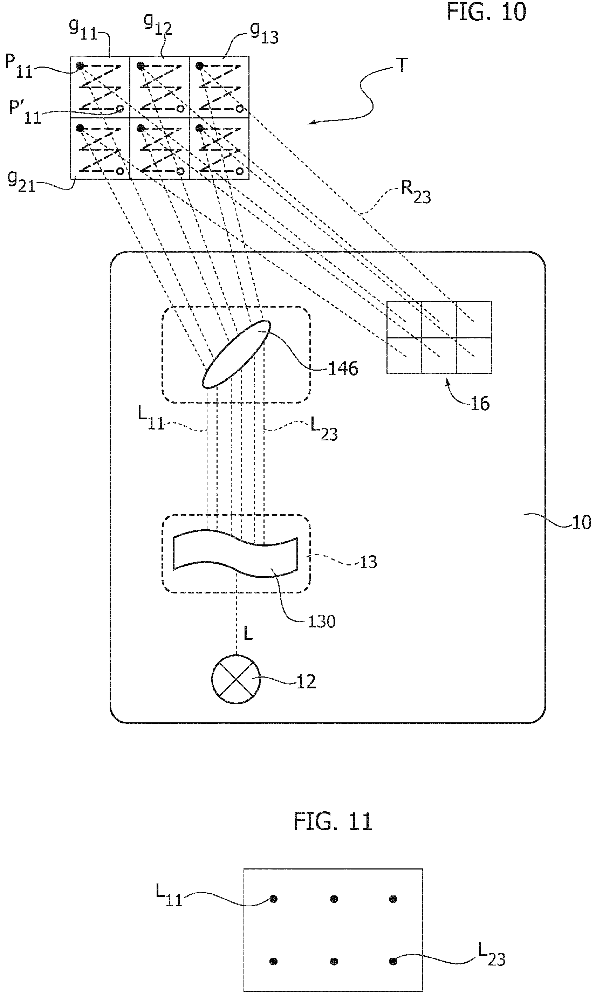

As exemplified in Figure 10, which is an example not according to the invention, a diffractive optical element 130 (briefly, DOE) is suitable for use as beam shaping optics 13 arranged between the laser source 12 and the beam steering arrangement 14.

DOEs are optical elements known per se. These elements exploit diffraction and interference phenomena to generate an arbitrary distribution of (projected) light (spots). A diffractive beam splitter or a diffractive lattice are exemplary DOEs.

As exemplified in Figure 10, the DOE 130 is configured to reshape the laser beam L from the laser source 12 into a plurality of light beams L1, ..., L6 having a plurality of transverse spot sizes forming a matrix of light spots with a size equal to the size of the grid projected onto the target.

As exemplified herein, the apparatus comprises a diffractive optical element, DOE, (for instance, 130) intermediate the laser source 12 and the beam steering arrangement 14, the DOE element configured to split the beam of light pulses, providing a plurality of beams of light pulses (for instance, $L_{11}$, $L_{23}$) to the beam steering arrangement.

Figure 11 is an exemplary transverse beam spot-size (e.g., which may be seen by introducing a screen at the chain line in Figure 10) that can be output by the DOE 130. As exemplified in Figure 11, the DOE 130 is configured to that the plurality beams $L_{11}$,...$L_{23}$ has respective point-like beam spot size arranged in a matrix.

As exemplified in Figure 10, the beam steering arrangement 14 comprises a multi-axial steering arrangement (e.g., bi-linear MEMS lens 146) configured to steer each ij-th light spot projected by an ij-th light beam in the plurality of light beams $L_{11}$,...,$L_{23}$ within each respective ij-th grid cell (e.g., $L_{11}$ within $g_{11}$ and $L_{23}$ within $g_{23}$), in different positions therein so as to progressively illuminate (e.g., with a linear pattern) the area of the ij-th grid cell.

As exemplified in Figure 10, each ij-th sensor in the array of sensor 16 is configured to detect an ij-th reflected light beam echoed back by the targe with proper reflectivity and at a proper distance, providing a respective ij-th TOF measurement as a result.

For instance, the resolution of the system or apparatus 10 exemplified in Figure 10 is equal to a resolution of sensor and DOE (e.g., 64 x 64) times a resolution of the beam steering arrangement 14 (for example, 30 x 17 resolution of the MEMS lens 146, leading to a total resolution about FHD 1920 x 1080).

The beam shaping arrangement 13 with the DOE 130 can be further configured to compensate for geometrical distortion of the spot matrix due to the optical projection path (mainly MEMS lens or mirrors).

In one or more embodiments, exploiting MEMS technology facilitated providing a very small, lightweight and fast apparatus/system 10. For example, the lens/mirror can be a few millimeters wide with an oscillating frequency in the range 10-1000 Hz.

According to the invention, a method of operating an apparatus according to claims 1-6, comprises: driving (for instance, 20) the beam steering arrangement (for instance, 14) to cyclically vary the direction of transmission (for instance, $\alpha$, $\beta$) of the light pulses (for instance, P1, P1') and to transmit at least one light pulse (for instance, P1, P2, P3, P4, P5, P6, P7, P8) per each grid cell portion (for instance, $g_1$) of the partitioned FOV (for instance, T) of the array of sensors.

As exemplified herein, the method comprises driving the beam steering arrangement to vary the direction of transmission of the light pulses within each grid cell (for instance, $g_{ij}$) in the portioned FOV (for instance, T) of the array of sensors.

As exemplified herein, the method comprises:

selecting a pattern among a raster scan pattern and a Lissajous pattern,
driving the beam steering arrangement to cyclically vary the direction of transmission of the light pulses according to the selected pattern.

As exemplified herein, the method comprises:

collecting signals produced from sensors of the array of sensors, and

calculating (for instance, 20) a measurement of a distance of the target from the apparatus based on the signals collected.

The extent of protection is defined by the annexed claims.

**Claims**

1. An apparatus (10), comprising:

   a laser light source (12) configured to transmit at least one beam of light pulses (L) towards a target, projecting at least one corresponding beam spot (P) thereon,
   an array of sensors (16) with a plurality of sensors (16i, 16j, 16ij) distributed according to a grid (G), sensors (16i) in the array of sensors (16) configured to sense a light pulse incident thereon in response to reflection of at least one light pulse (P, $P_1$, $P_1$') of the beam of light pulses (L) from a field of view, FOV, region (T) in the target, sensors (16i) in the array of sensors (16) further configured to provide a signal indicative of a time of incidence thereon of at least one light pulse (R, R'),
   wherein:

   the FOV region (T) of the array of sensors (16) is portioned into grid cells ($g_{ij}$) according to the grid (G),
   each sensor (16i) in the array of sensors (16) is configured to sense at least one echo light pulse (R, R') reflected from a respective grid cell ($g_1$) in the portioned FOV region (T),
   the apparatus (10) comprises a beam steering arrangement (14) configured to cyclically vary a direction of transmission ($\alpha$, $\beta$) of the beam of light pulses (L), projecting at least one beam spot (P, $P_1$, $P_1$') per grid cell ($g_{ij}$) in the portioned FOV region (T),
   the apparatus (10) **characterized in that**:

   - the beam steering arrangement (14) comprises:

   a first microelectromechanical, MEMS, mirror (140) configured to oscillate around a first axis with a first oscillating angle ($\alpha$), and
   a second MEMS mirror (142) configured to oscillate around a second axis with a second oscillating angle ($\beta$),

   wherein each of the first MEMS mirror (140) and the second MEMS mirror (142) is coupled to a respective actuating device (A1, A2) configured to drive an oscillating movement of the respective mirror (140, 142),
   wherein the beam steering arrangement (14) further comprises a MEMS lens (146) coupled to at least one of the first (140) and second (142) MEMS mirrors (140, 142), the MEMS lens (146) configured to vary the direction of transmission ($\alpha$, $\beta$) of the light pulses (P1, P1') within each grid cell ($g_{ij}$) in the portioned FOV (T) of the array of sensors (16).

2. The apparatus (10) of claim 1, wherein the first axis of oscillation of the first MEMS mirror (140) and the second axis of oscillation of the second MEMS mirror (142) are orthogonal therebetween.

3. The apparatus (10) of claim 2, wherein the apparatus (10) comprises a diffractive optical element, DOE, (130) intermediate the laser source (12) and the beam steering arrangement (14), the DOE element (130) configured to split the beam of light pulses (L), producing a plurality of beams of light pulses ($L_{11}$, $L_{23}$) to the beam steering arrangement (14).

4. The apparatus (10) of any of the previous claims, wherein at least one sensor (16i) in the array of sensors (16) comprises an avalanche photodiode, APD, or a single photon avalanche photodiode, SPAD.

5. The apparatus (10) of any of the previous claims, wherein the beam steering arrangement (14) is configured to cyclically vary the direction of transmission ($\alpha$, $\beta$) of the light pulses (P1, P1') according to a pattern, preferably selected among a raster scan pattern and a Lissajous pattern.

6. The apparatus (10) of any of the previous claims, comprising at least one of:

   a first optical element (15a) coupled to the beam steering arrangement (14), the first optical element (15a) interposed the beam steering arrangement (14) and the target, and
   a second optical element (15b) coupled to the array of sensors (16), the second optical element interposed the target and the array of sensors (16),
   wherein the first and/or second optical elements are configured to counter a Keystone-Pincushion deformation during projecting at least one beam spot (P, $P_1$, $P_1$') per grid cell ($g_{ij}$) in the portioned FOV region (T).

7. A method of operating an apparatus (10) according to any of claims 1 to 6, the method comprising driving (20) the beam steering arrangement (14) to cyclically vary the direction of transmission (α, β) of the light pulses (P1, P1') and to transmit at least one light pulse (P1, P2, P3, P4, P5, P6, P7, P8) per each grid cell portion (g1, g2, g3, g4, g5, g6, g7, g8) of the partitioned FOV (T) of the array of sensors (16).

8. The method of claim 7, comprising driving (20) the beam steering arrangement (14) to vary the direction of transmission (α, β) of the light pulses (P1, P1') within each grid cell ($g_{ij}$) in the portioned FOV (T) of the array of sensors (16)

9. The method of claim 7 or claim 8, comprising:

   selecting a pattern among a raster scan pattern or a Lissajous pattern,
   driving (20) the beam steering arrangement (14) to cyclically vary the direction of transmission (α, β) of the light pulses (P1, P1') according to the selected pattern.

10. The method of any of claims 7 to 9, comprising:

    collecting signals produced from sensors of the array of sensors (16), and
    calculating (20) a measurement of a distance of the target from the apparatus (10) based on the signals collected.


**Patentansprüche**

1. Vorrichtung (10), umfassend:

   eine Laserlichtquelle (12), die so konfiguriert ist, dass sie mindestens einen Lichtimpulsstrahl (L) auf ein Ziel überträgt, wobei mindestens ein entsprechender Lichtpunkt (P) darauf projiziert wird,
   ein Array von Sensoren (16) mit einer Vielzahl von Sensoren (16i, 16j, 16ij), die entsprechend einem Raster (G) verteilt sind, wobei Sensoren (16i) in dem Array von Sensoren (16) so konfiguriert sind, dass sie als Reaktion auf die Reflexion von mindestens einem Lichtimpuls (P, $P_1$, $P_1'$) des Strahls von Lichtimpulsen (L) aus einem Bereich (T) des Sichtfelds, FOV, in dem Ziel einen darauf auftreffenden Lichtimpuls erfassen, Sensoren (16i) in dem Array von Sensoren (16) ferner so konfiguriert sind, dass sie ein Signal bereitstellen, das einen Zeitpunkt des Auftreffens mindestens eines Lichtimpulses (R, R') darauf angibt, wobei:

   der FOV-Bereich (T) des Arrays von Sensoren (16) entsprechend dem Raster (G) in Rasterzellen ($g_{ij}$) unterteilt wird, jeder Sensor (16i) in dem Array von Sensoren (16) so konfiguriert ist, dass er mindestens einen Echolichtimpuls (R, R') erfasst, der von einer jeweiligen Rasterzelle ($g_1$) in dem unterteilten FOV-Bereich (T) reflektiert wird, die Vorrichtung (10) eine Strahlsteuerungsanordnung (14) umfasst, die so konfiguriert ist, dass sie die Übertragungsrichtung (α, β) des Strahls von Lichtimpulsen (L) zyklisch variiert und mindestens einen Strahlpunkt (P, $P_1$, $P_1'$) pro Rasterzelle ($g_{ij}$) in der unterteilten FOV-Region (T) projiziert, die Vorrichtung (10) **dadurch gekennzeichnet ist, dass**:

   - die Strahlsteuerungsanordnung (14) Folgendes umfasst:

     einen ersten mikroelektromechanischen Spiegel, MEMS-Spiegel, (140), der so konfiguriert ist, dass er um eine erste Achse mit einem ersten Oszillationswinkel (α) schwingt, und
     einen zweiten MEMS-Spiegel (142), der so konfiguriert ist, dass er um eine zweite Achse mit einem zweiten Oszillationswinkel (β) schwingt, wobei jeweils der erste MEMS-Spiegel (140) und der zweite MEMS-Spiegel (142) mit einer jeweiligen Betätigungsvorrichtung (A1, A2) gekoppelt ist, die so konfiguriert ist, dass sie eine oszillierende Bewegung des jeweiligen Spiegels (140, 142) antreibt, wobei die Strahlsteuerungsanordnung (14) ferner eine MEMS-Linse (146) umfasst, die mit mindestens einem von dem ersten (140) und dem zweiten (142) MEMS-Spiegel (140, 142) gekoppelt ist, wobei die MEMS-Linse (146) so konfiguriert ist, dass sie die Übertragungsrichtung (α, β) der Lichtimpulse (P1, P1') innerhalb jeder Rasterzelle (gij) in dem unterteilten FOV (T) des Arrays von Sensoren (16) variiert.

2. Vorrichtung (10) nach Anspruch 1, wobei die erste Oszillationsachse des ersten MEMS-Spiegels (140) und die zweite Oszillationsachse des zweiten MEMS-Spiegels (142) orthogonal zueinander stehen.

3. iVorrichtung (10) nach Anspruch 2, wobei die Vorrichtung (10) ein diffraktives optisches Element, DOE, (130) zwischen der Laserquelle (12) und der Strahlsteuerungsanordnung (14) umfasst, wobei das DOE-Element (130) so konfiguriert ist, dass es den Strahl von Lichtimpulsen (L) aufspaltet und eine Vielzahl von Strahlen von Lichtimpulsen ($L_{11}$, $L_{23}$) zu der Strahlsteuerungsanordnung (14) erzeugt.

4. Vorrichtung (10) nach einem der vorhergehenden Ansprüche, wobei mindestens ein Sensor (16i) in dem Array von Sensoren (16) eine Lawinen-Photodiode, APD, oder eine Einzelphotonen-Lawinen-Photodiode, SPAD, umfasst.

5. Vorrichtung (10) nach einem der vorhergehenden Ansprüche, wobei die Strahlsteuerungsanordnung (14) so konfiguriert ist, dass sie die Übertragungsrichtung ($\alpha$, $\beta$) der Lichtimpulse (P1, P1') entsprechend einem Muster, das vorzugsweise aus einem Rasterscanmuster und einem Lissajous-Muster ausgewählt wird, zyklisch variiert.

6. Vorrichtung (10) nach einem der vorhergehenden Ansprüche, die mindestens eines von Folgendem umfasst:

ein erstes optisches Element (15a), das mit der Strahlsteuerungsanordnung (14) gekoppelt ist, wobei das erste optische Element (15a) zwischen der Strahlsteuerungsanordnung (14) und dem Ziel angeordnet ist, und
ein zweites optisches Element (15b), das mit dem Array von Sensoren (16) gekoppelt ist, wobei das zweite optische Element zwischen dem Ziel und dem Array von Sensoren (16) angeordnet ist,
wobei das erste und/oder das zweite optische Element so konfiguriert sind, dass sie einer Keystone-Pincushion-Verformung während der Projektion von mindestens einem Strahlpunkt (P, $P_1$, $P_1$') pro Rasterzelle ($g_{ij}$) in der unterteilten FOV-Region (T) entgegenwirken.

7. Verfahren zum Betreiben einer Vorrichtung (10) nach einem der Ansprüche 1 bis 6, wobei das Verfahren das Antreiben (20) der Strahlsteuerungsanordnung (14) umfasst, um die Übertragungsrichtung ($\alpha$, $\beta$) der Lichtimpulse (P1, P1') zyklisch zu variieren und mindestens einen Lichtimpuls (P1, P2, P3, P4, P5, P6, P7, P8) pro Rasterzellenabschnitt (g1, g2, g3, g4, g5, g6, g7, g8) des unterteilten Sichtfelds (T) des Arrays von Sensoren (16) zu übertragen.

8. Verfahren nach Anspruch 7, das das Antreiben (20) der Strahlsteuerungsanordnung (14) umfasst, um die Übertragungsrichtung ($\alpha$, $\beta$) der Lichtimpulse (P1, P1') innerhalb jeder Rasterzelle ($g_{ij}$) in dem unterteilten FOV (T) des Arrays von Sensoren (16) zu variieren.

9. Verfahren nach Anspruch 7 oder Anspruch 8, das Folgendes umfasst:

Auswählen eines Musters aus einem Rasterscanmuster oder einem Lissajous-Muster, Antreiben (20) der Strahlsteuerungsanordnung (14), um die Übertragungsrichtung ($\alpha$, $\beta$) der Lichtimpulse (P1, $P_1$') entsprechend dem ausgewählten Muster zyklisch zu variieren.

10. Verfahren nach einem der Ansprüche 7 bis 9, das Folgendes umfasst:

Sammeln von Signalen, die von Sensoren des Arrays von Sensoren (16) erzeugt werden, und Berechnen (20) einer Messung eines Abstands des Ziels von der Vorrichtung (10) basierend auf den gesammelten Signalen.

**Revendications**

1. Appareil (10), comprenant :

une source de lumière laser (12) configurée pour transmettre au moins un faisceau d'impulsions lumineuses (L) vers une cible, en projetant au moins un point de faisceau (P) correspondant sur celle-ci,
un réseau de capteurs (16) ayant une pluralité de capteurs (16i, 16j, 16ij) distribués conformément à une grille (G), des capteurs (16i) du réseau de capteurs (16) étant configurés pour détecter une impulsion lumineuse incidente sur ceux-ci en réponse à une réflexion d'au moins une impulsion lumineuse (P, $P_1$, $P_1$') du faisceau d'impulsions lumineuses (L) depuis une région (T) de champ de vision, FOV, dans la cible, des capteurs (16i) du réseau de capteurs (16) étant en outre configurés pour fournir un signal indiquant un temps d'incidence sur ceux-ci d'au moins une impulsion lumineuse (R, R'),
dans lequel :

la région FOV (T) du réseau de capteurs (16) est partagée en cellules de grille ($g_{ij}$) conformément à la grille (G),
chaque capteur (16i) dans le réseau de capteurs (16) est configuré pour détecter au moins une impulsion lumineuse d'écho (R, R') réfléchie par une cellule de grille ($g_1$)

respective dans la région FOV (T) partagée, l'appareil (10) comprend un agencement de guidage de faisceau (14) configuré pour faire varier cycliquement une direction de transmission ($\alpha$, $\beta$) du faisceau d'impulsions lumineuses (L), en projetant au moins un point de faisceau (P, $P_1$, $P_1$') par cellule de grille ($g_{ij}$) dans la région FOV (T) partagée,

l'appareil (10) étant **caractérisé en ce que** :

- l'agencement de guidage de faisceau (14) comprend :

un premier miroir (140) microélectromécanique, MEMS, configuré pour osciller autour d'un premier axe avec un premier angle d'oscillation (a), et

un second miroir MEMS (142) configuré pour osciller autour d'un second axe avec un second angle d'oscillation ($\beta$),

dans lequel chacun du premier miroir MEMS (140) et du second miroir MEMS (142) est couplé à un dispositif d'actionnement (A1, A2) respectif configuré pour entraîner un mouvement oscillant du miroir (140, 142) respectif,

dans lequel l'agencement de guidage de faisceau (14) comprend en outre une lentille MEMS (146) couplée à au moins l'un des premier (140) et second (142) miroirs MEMS (140, 142), la lentille MEMS (146) étant configurée pour faire varier la direction de transmission ($\alpha$, $\beta$) des impulsions lumineuses (P1, P1') au sein de chaque cellule de grille (gij) dans la région FOV (T) partagée du réseau de capteurs (16).

2. Appareil (10) selon la revendication 1, dans lequel le premier axe d'oscillation du premier miroir MEMS (140) et le second axe d'oscillation du second miroir MEMS (142) sont orthogonaux l'un par rapport à l'autre.

3. Appareil (10) selon la revendication 2, dans lequel l'appareil (10) comprend un élément optique de diffraction, DOE, (130) situé entre la source laser (12) et l'agencement de guidage de faisceau (14), l'élément DOE (130) étant configuré pour diviser le faisceau d'impulsions lumineuses (L), en produisant une pluralité de faisceaux d'impulsions lumineuses ($L_{11}$, $L_{23}$) dirigés vers l'agencement de guidage de faisceau (14).

4. Appareil (10) selon l'une quelconque des revendications précédentes, dans lequel au moins un capteur (16i) dans le réseau de capteurs (16) comprend une photodiode à avalanche, APD, ou une photodiode à avalanche à photon unique, SPAD.

5. Appareil (10) selon l'une quelconque des revendications précédentes, dans lequel l'agencement de guidage de faisceau (14) est configuré pour faire varier cycliquement la direction de transmission ($\alpha$, $\beta$) des impulsions lumineuses (P1, $P_1$') conformément à un motif, de préférence choisi parmi un motif de balayage de trame et un motif de Lissajous.

6. Appareil (10) selon l'une quelconque des revendications précédentes, comprenant au moins l'un parmi :

un premier élément optique (15a) couplé à l'agencement de guidage de faisceau (14), le premier élément optique (15a) étant interposé entre l'agencement de guidage de faisceau (14) et la cible, et

un second élément optique (15b) couplé au réseau de capteurs (16), le second élément optique étant interposé entre la cible et le réseau de capteurs (16),

dans lequel les premier et/ou second éléments optiques sont configurés pour contrer une déformation Keystone-Pincushion pendant la projection d'au moins un point de faisceau (P, $P_1$, $P_1$') par cellule de grille ($g_{ij}$) dans la région FOV (T) partagée.

7. Procédé de fonctionnement d'un appareil (10) selon l'une quelconque des revendications 1 à 6, le procédé comprenant l'entraînement (20) de l'agencement de guidage de faisceau (14) pour faire varier cycliquement la direction de transmission (a, $\beta$) des impulsions lumineuses (P1, P1') et pour transmettre au moins une impulsion lumineuse (P1, P2, P3, P4, P5, P6, P7, P8) pour chaque portion de cellule de grille (g1, g2, g3, g4, g5, g6, g7, g8) du FOV (T) partitionné du réseau de capteurs (16).

8. Procédé selon la revendication 7, comprenant l'entraînement (20) de l'agencement de guidage de faisceau (14) pour faire varier la direction de transmission ($\alpha$, $\beta$) des impulsions lumineuses (P1, P1') dans chaque cellule de grille ($g_{ij}$) du FOV (T) partagé du réseau de capteurs (16).

9. Procédé selon la revendication 7 ou 8, comprenant :

la sélection d'un motif parmi un motif de balayage de trame ou un motif de Lissajous,

l'entraînement (20) de l'agencement de guidage de faisceau (14) pour faire varier cycliquement la direction de transmission (a, β) des impulsions lumineuses (P1, P1') conformément au motif sélectionné.

10. Procédé selon l'une quelconque des revendications 7 à 9, comprenant :

la collecte de signaux produits par des capteurs du réseau de capteurs (16), et
le calcul (20) d'une mesure d'une distance de la cible par rapport à l'appareil (10) sur la base des signaux collectés.

# FIG. 1

# FIG. 2

FIG. 3

FIG. 4

# FIG. 5

# FIG. 6

# FIG. 7

# FIG. 8

# FIG. 9

FIG. 10

$g_{11}$  $g_{12}$  $g_{13}$

$P_{11}$

$P'_{11}$

T

$g_{21}$

$R_{23}$

146

$L_{11}$  $L_{23}$

16

10

13

130

L

12

FIG. 11

$L_{11}$

$L_{23}$

**EP 4 124 883 B1**

**Patent documents cited in the description**

- US 10324171 B2
- US 2020012166 A1
- US 10775508 B1
- IT 102020000022978
- US 17124027 B